Europäisches Patentamt

European Patent Office

Office européen des brevets

(19)

(11) Veröffentlichungsnummer: **0 342 563**

**A2**

(12) **EUROPÄISCHE PATENTANMELDUNG**

(21) Anmeldenummer: 89108661.3

(22) Anmeldetag: 13.05.89

(51) Int. Cl.⁴: **D01F 6/92**

(30) Priorität: 14.05.88 DE 3816540

(43) Veröffentlichungstag der Anmeldung:
23.11.89 Patentblatt 89/47

(84) Benannte Vertragsstaaten:
AT BE CH DE ES FR GB IT LI NL SE

(71) Anmelder: HOECHST AKTIENGESELLSCHAFT
Postfach 80 03 20
D-6230 Frankfurt am Main 80(DE)

(72) Erfinder: Freitag, Gerhard, Dr.
Am Waldeck 16a
D-6233 Kelkheim (Taunus)(DE)
Erfinder: Maiwald, Wolfgang
Kiefernstrasse 5e
D-8903 Bobingen(DE)

(54) Biegefeste Polyesterfilamente, ihre Herstellung und Verwendung.

(57) Biege- und spleißfeste Filamente aus einem modifizierten, hochmolekularen Polyester, bestehend aus einer homogenen Mischung von 80 bis 99 Gew.-% eines spinnbaren Grundpolyesters mit einer I.V. von >0,75 dl/g,
1 bis 20 Gew.-% eines hochmolekularen Zusatzmittels aus der Gruppe der Polyester und Copolyester mit gewinkelten und/oder flexiblen Kettengliedern, aus der Gruppe der zumindest teilweise aliphatischen Polyamide und/oder aus der Gruppe der Polycarbonate und gegebenenfalls Reaktionsprodukten des Grundpolyesters mit den hochmolekularen Zusatzmitteln in einer Menge, die bis zu 30 Mol.-% der eingesetzten Zusatzmittel beträgt.

EP 0 342 563 A2

x = KNOWN FILAMENTS

(X) FILAMENTS ACCORDING TO THE INVENTION

FLEXING REVOLUTIONS B

FILAMENT DIAMETER d (mm)

THE FUNCTION $B = B_0 \cdot d^{-3.5}$

## Biegefeste Polyesterfilamente, ihre Herstellung und Verwendung

Die vorliegende Erfindung betrifft Polyesterfilamente, die sich durch hohe Biegefestigkeit und Spleißfestigkeit auszeichnen. Sie bestehen aus einem modifizierten, hochmolekularen Polyethylenterephthalat und eigenen sich besonders für technische Einsatzgebiete, in denen sie hohen Walkbelastungen ausgesetzt sind, wie sie z.B. in der Preßpartie von Papiermaschinen auftreten.

In der Langsiebpartie von Papiermaschinen erfolgte in den letzten Jahrzehnten eine weitgehende Substitution der Phosphorbronzesiebe durch Siebe aus synthetischen Monofilen, zum größten Teil aus Polyestern, insbesondere aus Polyethylenterephthalat. Der Vorteil von Polyestersieben ist ihre lange Lebensdauer und ihre Maßhaltigkeit. Im Gegensatz zur Langsiebpartie werden in der Preßpartie der Papiermaschinen sowohl für Pressentücher als auch für die Grundgewebe von Pressenfilzen vorwiegend Polyamidmonofile benutzt.

Polyamide bleiben allerdings aufgrund ihrer relativ hohen Feuchtigkeitsaufnahme nicht maßhaltig. Der Ersatz der Polyamide durch Polyolefine, die eine geringe Wasseraufnahme zeigen, scheitert, an der Kriechneigung von Polyolefinen unter Last. Polybutylenterephthalat wird oft als Polyamid-ähnlicher Polyester bezeichnet. Monofile aus Polybutylenterephthalat ergeben aber Gewebe, die aufgrund des speziellen Kristallisationsverhaltens dieses Polymers nicht ausreichend fixierbar sind. Monofile aus Polyethylenterephthalat neigen unter der Walkarbeit in der Preßpartie zum Aufspleissen.

Es sind auch bereits Bemühungen bekannt geworden, die Einsatzmöglichkeit von Polyestermaterialien im Naßbereich von Papiermaschinen dadurch zu erhöhen, daß man ihre Hydrolyseresistenz steigert. In der japanischen Patentoffenlegungsschrift 51 136-923 wird zu diesem Zweck vorgeschlagen, Polyestermonofilamente einzusetzen, die aus einem 0,1 bis 40 Gew.-% Polyolefine enthaltenden Polyalkylenterephthalat hergestellt worden sind. Als Polyolefine sollen hierbei Polyethylen, Polypropylen oder Poly-4-methylpenten-1 eingesetzt werden. Selbst bei hohem Carboxylendgruppen-Gehalt des Polyesters soll sich durch diesen Zusatz eine hohe Hydrolyseresistenz der Filamente ergeben. Ein ähnlicher Vorschlag zur Verbesserung der Hydrolyseresistenz von Polyesterfilamenten ist aus der Europäischen Patentschrift 72 917 bekannt. Darin wird vorgeschlagen, dem Polyester nicht nur Polyethylen oder Polypropylen zuzusetzen, sondern auch noch die reaktiven Endgruppen durch Umsetzung mit Polycarbodiimiden zu maskieren. Die aus dieser Druckschrift bekannten Polyesterfilamente sollen eine geringe Spleißneigung und eine hohe Steifigkeit zeigen.

Die genannten Druckschriften geben keinen Hinweis auf die Möglichkeit, die Biegefestigkeit, d.h. die Resistenz der Filamente gegen häufiges starkes Verbiegen zu erhöhen. Außerdem ergeben sich bei der technischen Durchführung der bekannten Vorschläge dadurch Schwierigkeiten, daß die Polyolefinzusätze im Polyestermaterial nicht löslich sind. Es entstehen daher stets zweiphasige Schmelzen, die außerordentlich gründlich homogenisiert werden müssen, wenn es nicht zu Störungen im Spinnprozeß kommen soll. Auch erweist es sich in der Praxis als sehr schwierig, die Filamenteigenschaften über größere Längen konstant zu halten.

Es bestand daher ein Bedürfnis nach einem Filamentmaterial, das die Vorteile von Polyestern, insbesondere von Polyethylenterephthalat, nämlich hervorragende Maßhaltigkeit und Fixierbarkeit mit erhöhter Biegefestigkeit und Spleißfestigkeit vereint, das hohe Beständigkeit gegen Walkarbeit zeigt und somit für starke dynamische Beanspruchungen, wie sie z.B. in der Preßpartie von Papiermaschinen auftreten, geeignet ist und das einwandfrei und über große Längen qualitätskonstant produziert werden kann. Diesen hohen Qualitätsmerkmale sollen insbesondere auch bei Monofilamenten mit sehr hohen Einzeltitern von 100 - 10 000 gegeben sein. Die vorliegende Erfindung stellt ein derartiges Filamentmaterial zur Verfügung.

Ein Gegenstand der vorliegenden Erfindung ist daher ein biege- und spleißfestes Filament aus einem modifizierten, hochmolekularen Polyester, der aus 80 bis 99 Gew.-%, vorzugsweise 90 bis 98 Gew.-% eines spinnbaren Grundpolyesters mit einer Grenzviskosität (intrinsic viscosity, I.V.) von über 0,75, vorzugsweise über 0,85 dl/g, 1 bis 20 Gew.-%, vorzugsweise 2 bis 10 Gew.-% eines hochmolekularen Zusatzmittels aus der Gruppe der Polyester und Copolyester mit gewinkelten und/oder flexiblen Kettengliedern und/oder der Gruppe, der zumindest teilweise aliphatischen Polyamide und/oder der Gruppe der Polycarbonate und gegebenenfalls Reaktionsprodukten des Grundpolyesters mit den hochmolekularen Zusatzmitteln in einer Menge, die bis zu 30 Mol-%, vorzugsweise nicht mehr als 10 Mol-% der eingesetzten Zusatzmittel beträgt, besteht.

Der Grundpolyester ist der Hauptbestandteil des modifizierten Polyesters, aus dem die erfindungsgemäßen Filamente hergestellt werden. Mindestens 90 Mol-%, vorzugsweise mindestens 95 Mol-% seiner Säurereste sind Terephthalsäurereste und mindestens 90 Mol-%, vorzugsweise 95 Mol-% seiner Diolreste sind Ethylenglykolreste. Neben den Terephthalsäureresten kann der Grundpolyester als Baugruppen bis zu 10 Mol-%, vorzugsweise maximal 5 Mol-% Reste anderer Dicarbonsäuren oder Hydroxycarbonsäuren, wie z.B. Sulfoisophthalsäure, Sulfobernsteinsäure, Naphthalin-2,6- oder -1,4-dicarbonsäure, Adipinsäure oder p-Hydroxybenzoesäure enthalten.

Ähnliches gilt für die Diolkomponente des Grundpolyesters. Neben den Ethylenglykolresten kann er bis zu 10 Mol-%, vorzugsweise maximal 5 Mol-% anderer Diolreste, wie z.B. Trimethylen- oder Tetramethylenglykolreste, Reste von Di-oder Triglykol (2,2'-Dihydroxy-diethylether oder 1,2-Bis-(2-hydroxyethoxy)-ethan) oder Polyglykolreste enthalten.

Bevorzugt sind Grundpolyester, die neben Terephthalsäureresten und Ethylenglykolresten maximal je 2,5 Mol-% anderer Dicarbonsäure- und Diolreste enthalten. Besonders bevorzugter Grundpolyester ist Polyethylenterephthalat.

Der Grundpolyester hat eine Grenzviskosität (I.V.) von >0,75 dl/g. Die im Rahmen dieser Patentanmeldung genannten I.V.-Werte werden in an sich bekannter Weise bestimmt, indem man die reduzierten spezifischen Viskositäten

$$\eta_{red} = \frac{\eta - \eta_0}{\eta_0 \cdot C}$$

von Lösungen des Polymermaterials bei verschiedenen, niedrigen Konzentrationen C mißt und die Meßergebnisse auf die Konzentration 0 extrapoliert. Die angegebenen I.V.-Werte beziehen sich auf das Lösungsmittel Dichloressigsäure und die Meßtemperatur 25°C.

Polyester oder Copolyester, die als hochmolekulare Zusatzmittel in dem modifizierten Polyester der erfindungsgemäßen Filamente enthalten sein können sollen gewinkelte oder flexible Kettenglieder aufweisen. Gewinkelte Kettenglieder sind solche, die einen weitgehend starren Aufbau haben, d.h. aromatischer Natur sind und bei denen die Bindungen, welche die Glieder der Polymerkette miteinander verbinden, in einem Winkel zueinander angeordnet sind. Beispiele für solche gewinkelten Kettenglieder sind u.A. der Isophthalsäurerest, der Naphtalin-1,6-dicarbonsäurerest oder die Reste von m-Hydroxybenzosäure und m-(ω-Hydroxyethyl)-benzoesäure. Bevorzugtes gewinkeltes Kettenglied ist der Isophthalsäurerest. Flexible Kettenglieder enthalten einen aliphatischen oder hydroaromatischen Rest, der die hohe Beweglichkeit des Kettengliedes bedingt. Flexible Dicarbonsäurereste sind die Reste aliphatischer oder hydroaromatischer Dicarbonsäuren mit insgesamt 4 - 12 C-Atomen wie z.B. Reste der Adipinsäure, der Azelainsäure, der Sebazinsäure oder der Hexahydroterephthalsäure. Flexible Diolreste leiten sich ab von Diolen mit 3 - 10 C-Atomen, wie z.B. vom 1,3-Propandiol, 1,4-Butandiol, 1,6-Hexandiol, Neopentylglykol, Tetrahydrofurandiol oder 1,4-Bis-(hydroxymethyl)-cyclohexan, Di- und Triethylenglykol aber auch vom Polyethylenglykol. Als weitere flexible Reste eignen sich auch Reste von 3- oder 4- (ω-Hydroxyalkyl)-benzoesäure mit 2 bis 8 C-Atomen in der Alkylkette. Der als hochmolekulare Zusatzmittel eingesetzte Polyester kann ausschließlich aus den obengenannten gewinkelten und/oder flexiblen Bausteinen aufgebaut sein. Es ist jedoch bevorzugt, Polyester einzusetzen, die zumindest bezüglich der Säurekomponente zum überwiegenden Teil starre, nicht gewinkelte Kettenglieder aufweisen. Solche Polyester sind z.B. aus Terephthalsäure als Säurekomponente und Diolen mit 3 bis 12, vorzugsweise 3 bis 6 Kohlenstoffatomen, Di- und Triethylenglycol oder Polyethylenglycol aufgebaut. Weiterhin bevorzugt als hochmolekulare Zusatzmittel sind Copolyester, deren Diolkomponente Ethylenglykol und deren Säurekomponente im wesentlichen Terephthalsäure ist, und die lediglich einen Anteil von 5 bis 25 Mol.-% von gewinkelten oder flexiblen Säureresten wie z.B. den Isophthalsäurerest, den Adipinsäurerest oder den Hexahydroterephthalsäurerest aufweisen. Günstige hochmolekulare Zusatzmittel sind auch solche, die neben einem überwiegenden Anteil von Terephthalsäure und Ethylenglykolresten in der Polymerkette sowohl gewinkelte oder flexible Säurereste als auch flexible Diolreste in einem Anteil von insgesamt 5 bis 25 Mol.-% (Gesamtanteil der Dicarbonsäure bzw. des Diols jeweils = 100 Mol.-%) aufweisen.

Besteht der Grundpolyester nicht aus reinem Polyethylenterephthalat, so wird die Zusammensetzung eines als hochmolekulares Zusatzmittel eingesetzten Polyesters oder Copolyesters so gewählt, daß er sich von der des Grundpolyesters unterscheidet. Der Unterschied zwischen Grundpolyester und Zusatzmittel kann in der Art und/oder im Anteil der darin enthaltenen Dicarbonsäure- und/oder Diolreste bestehen. Vorzugsweise wählt man die Zusammensetzung des Zusatzmittels so, daß sich in Mischung mit dem Grundpolyester der Anstieg der Biegefestigkeit B (in Touren) auf einen Wert

$$B \geq B_\sigma \bullet d^{-3,5}$$

ergibt, wobei $B_\sigma$ eine Konstante mit dem Wert 740 und d der Filamentdurchmesser in mm ist.

Bei gegebener Zusammensetzung des Grundpolyesters kann die Zusammensetzung des Zusatzmittels leicht so weit abgeändert werden, daß sich dieser Effekt einstellt.

Besonders bevorzugt sind erfindungsgemäße Filamente, die als hochmolekulares Zusatzmittel einen Copolyester enthalten, der überwiegend aus Terephthalsäure und Ethylenglykolresten aufgebaut ist und 5 bis 25 Mol.-% Isophthalsäurereste aufweist. Weitere besonders bevorzugte erfindungsgemäße Filamente enthalten als hochmolekulares Zusatzmittel Polybutylenterephthalat, insbesondere ein solches mit einer I.V. von ≧ 0,8, insbesondere ≧ 1,0 dl/g.

Weiterhin kommen als hochmolekulare Zusatzmittel zumindest teilweise aliphatische Polyamide in Betracht, insbesondere solche, die mindestens 50 Mol.-% aliphatische Kettenglieder aufweisen. Aromatische Kettenglieder, die in den als hochmolekulare Zusatzmittel einzusetzenden Polyamiden enthalten sein können, sind beispielsweise Isophthal- und Terephthalsäurereste, sowie Reste von p- und m-Phenylendiamin. Bevorzugt sind jedoch Polyamide, die frei sind von aromatischen Bausteinen.

Aliphatische Polyamidbausteine sind aus der Literatur in größerer Anzahl bekannt. Als Beispiele seien hier genannt Bausteine, die sich von folgenden, Polyamide bildenden Ausgangsmaterialien ableiten:
Aminobuttersäure, 7-Aminoheptansäure bzw. Oenantolactam, Capryllactam, 11-Aminoundecansäure oder Laurinlactam. Auch Polyamide, die durch Cokondensation von Diaminen und Dicarbonsäuren hergestellt werden, sind als hochmolekulare Zusatzmittel für die erfindungsgemäßen Filamente geeignet. In Betracht kommen hier Cokondensationsprodukte aus Butandiamin-1,4, Pentandiamin-1,5, Hexandiamin-1,6, Heptandiamin-1,7, Octandiamin-1,8, Nonandiamin-1,9, Decandiamin-1,10 mit Adipinsäure, Pimelinsäure, Korksäure, Azelainsäure, Sebacinsäure und Glutarsäure.

Aus Gründen der Zugänglichkeit besonders bevorzugt als hochmolekulare Zusatzmittel für die erfindungsgemäßen Filamente sind die bekannten, großtechnisch hergestellten Polymere Polyamid-6, Polyamid-6,6 und Polyamid-6,10.

Als hochmolekulare Zusatzmittel im Sinne dieser Erfindung kommen weiterhin in Betracht bekannte Polycarbonate. Erfindungsgemäß einsetzbare Polycarbonate enthalten als Diolkomponenten beispielsweise Reste von 2,2-(4,4-Dihydroxydiphenyl)-propan, dessen Tetrahalogen- oder Tetramethylderivat, 1,1-Di-(p-hydroxyphenyl)-cyclohexan oder z.B. p-Xylylenglykol (p-Di-(hydroxymethylen)-benzol). Bevorzugtes Polycarbonat für den erfindungsgemäßen Einsatz ist das auf Basis des unsubstituierten 2,2-(4,4-Dihydroxydiphenyl)-propan erhaltene.

Die oben als hochmolekulare Hilfsmittel einzusetzenden Substanzgruppen sind dem Fachmann alle bekannt. Ihre Herstellung kann ebenfalls nach an sich bekannten Verfahren erfolgen. Bezüglich der Herstellung verweisen wir z.B. auf die Ausführungen in "Ullman's Enzyklopädie der Technischen Chemie" unter den Stichworten "Polyester, Polyamide und Polycarbonate".

Im Gegensatz zu Polyolefinen sind die genannten hochmolekularen Zusatzmittel in dem Grundpolyester gut löslich. In der Regel lösen sich die zugesetzten Mengen daher in dem Grundpolyester vollständig oder zumindest weitgehend auf.

Die modifizierten Polyester, aus denen die erfindungsgemäßen Filamente ersponnen werden, stellen daher einphasige, homogene Mischungen der genannten Komponenten dar. Geringe Anteile ungelöster Zusatzmittel, die in dem modifizierten Polyester noch vorliegen können, stören nicht seine Verwendbarkeit für die Herstellung der erfindungsgemäßen Filamente.

Der modifizierte Polyester kann als hochmolekulares Zusatzmittel eine oder mehrere Substanzen aus den genannten Substanzgruppen enthalten. Bevorzugt ist es, als hochmolekulares Hilfsmittel Substanzen aus nur einer der genannten Gruppen, insbesondere eine einzige hochmolekulare Substanz einzusetzen.

Die obengenannten hochmolekularen Zusatzstoffe enthalten alle entweder Estergruppierungen oder Amidgruppen sowie an den Kettenenden Hydroxy- oder Carboxylgruppen. Sie sind daher prinzipiell in der Lage, bei erhöhten Temperaturen mit dem Grundpolyester chemisch zu reagieren. Umsetzungen dieser Art sind bereits bekannt geworden. Wir zitieren hierzu beispielsweise den Aufsatz von P. Kresse in "Faserforschung und Textiltechnik", Bd. 11 (1960), Seite 353 ff. Danach können z.B. die als hochmolekulare Zusatzmittel zugesetzten Polyester mit dem Grundpolyester bei der Schmelztemperatur der Polymeren unter Umesterung reagieren, wobei Bruchstücke der Polymerenkette der ersten Polyesterart mit Bruchstücken der Polymerenkette der zweiten Polyesterart verknüpft werden. Auf diese Weise entstehen zunächst sogenannte Blockcopolymere, die bei längerer Reaktionsdauer aus immer kürzeren Blöcken der beiden Polyesterarten zusammengesetzt sind und schließlich in einen statistisch aufgebauten Copolyester übergehen. Eine analoge Reaktion kann auch prinzipiell bei der Schmelztemperatur zwischen dem Grundpolyester und den als hochmolekularen Zusatzmitteln zugesetzten Polyamiden oder Polycarbonaten eintreten.

Die erfindungsgemäßen Filamente sollen nun möglichst wenig derartiger Reaktionsprodukte zwischen dem Grundpolyester und den zugesetzten hochmolekularen Zusatzmitteln enthalten. Durch geeignete Wahl der Herstellungsbedingungen ist dafür zu sorgen, daß nicht mehr als 30 Mol.-%, vorzugsweise nicht mehr als 10 Mol.-% des eingesetzten Zusatzmittels mit dem Polyethylenterephthalat in Reaktion treten kann.

Die vom Orientierungsgrad abhängige Dehnbarkeit der erfindungsgemäßen Filamente kann sich im Bereich von 10 bis 80 %, vorzugsweise 20 bis 60 % der Ausgangslänge bewegen. Die Einstellung der Dehnbarkeit wird zweckmäßigerweise dem beabsichtigten Einsatzgebiet der Filamente angepaßt. Filamente, die besonders flexibel und walkfest sein müssen, haben bevorzugt eine Dehnbarkeit im oberen Teil des angegebenen Dehnbarkeitsbereiches; Filamente, die im besonderen Maße auf Zug beansprucht werden und hohe Maßhaltigkeit aufweisen müssen, sollen eine Dehnbarkeit im unteren Teil des angegebenen Bereichs aufweisen. Einer besonders breiten Anwendung fähig sind erfindungsgemäße Filamente mit einer Dehnbarkeit von 40 -50 %.

Die vorliegende Erfindung eröffnet die Möglichkeit auch anwendungstechnisch besonders erwünschte sehr hochtitrige und dabei dynamisch hoch belastbare Monofilamente herzustellen. Sie wird daher bevorzugt zur Herstellung derartiger Monofilamente ausgeübt, und solche Monofilamente sind auch ein bevorzugter Gegenstand der Erfindung.

Besonders wertvoll sind solche erfindungsgemäßen Filamente, die eine Biegefestigkeit B entsprechend dem Ausdruck

$$B \geq B_\sigma \bullet d^{-3,5}$$

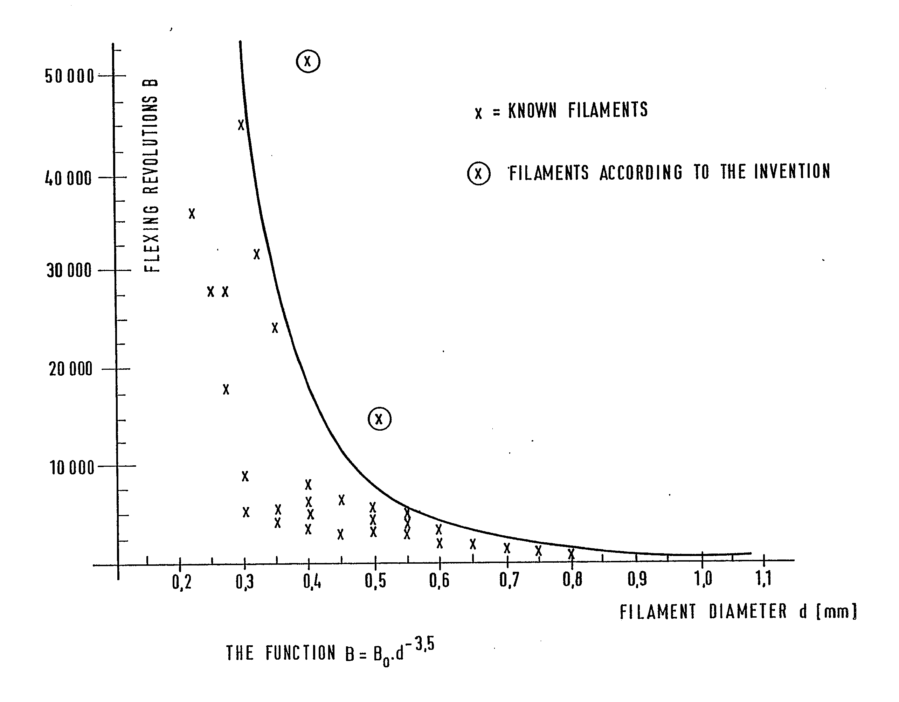

haben, worin B die Biegefestigkeit in Touren, d der Filamentdurchmesser in mm und $B_\sigma$ eine Konstante mit dem Wert 740 ist. Durch die hohe Biegefestigkeit unterscheiden sich die erfindungsgemäßen Filamente in besonders vorteilhafter Weise von bisher bekannten Polyesterfilamenten. Die Biegefestigkeit von Filamenten aus gleichen Grundstoffen ist umso größer je kleiner der Filamenttiter ist. Trägt man die Biegefestigkeiten bekannter Polyesterfilamente gegen deren Titer auf, so erhält man die in der Figur gezeigte Graphik. Man erkennt, daß die in der Graphik eingezeichneten Werte der bekannten Filamente alle unter einer Hüllkurve der Form

$$B = B_\sigma \bullet d^{-3,5}$$

liegen. Hierbei wurde die Biegefestigkeit für jede Filamentart an mindestens 20 Proben bestimmt. Gemessen wurden Filamente mit einer Einspannlänge von 200 mm bei einer Temperatur von 25 ° C und einer Vorlast von 0,675 cN/dtex, wobei die Biegestelle in der Mitte der Filamente lag und der Biegewinkel 60 ° nach links und rechts betrug.

Werden in gleicher Weise die im Ausführungsbeispiel erhaltenen erfindungsgemäßen Monofilamente mit 0,4 und 0,5 mm Durchmesser gemessen, so erhält man für das 0,5 mm Filament eine Biegefestigkeit B von 15 000 Touren, für das 0,4 mm Filament eine solche von 52 000 Touren. In die Figur sind die Daten dieser erfindungsgemäßen Filamente ebenfalls eingetragen worden. Man erkennt, daß sie sich jenseits der für bekannte Polyesterfilamente geltenden Hüllkurve befinden. Ein Vergleich ihrer Daten mit den Daten gleich starker bekannter Polyesterfilamente zeigt, daß das 0,5 mm Filament mindestens die dreifache, das 0,4 mm Filament mindestens die fünffache Biegefestigkeit hat wie die entsprechenden, gleich starken, bekannten Polyesterfilamente.

Die erfindungsgemäßen Filamente weisen neben der guten Biegefestigkeit auch eine ausgezeichnete Spleißfestigkeit auf. Die Spleißfestigkeit der Filamente kann geprüft werden mit Hilfe einer Nockenschlagprüfmaschine. Bei dieser Maschine wird das zu prüfende Filament mit einer bestimmten Geschwindigkeit z.B. 17 m/min. über einen Metallamboß gezogen. Ein exzentrisch gesteuerter Hammer schlägt im Abstand von 1 cm auf das Filament. Hierbei entsteht eine Verformung des Materials, die als Nocken bezeichnet wird. Die Nockenbreite kann dabei über den vertikal beweglichen Amboß eingestellt werden. Hammer und Amboß werden so zueinander eingestellt, daß sich das Filament durch den Hammerschlag auf etwa seine doppelte Breite verformt. Zur Auswertung des Tests wird durch Inspektion von ca. 1000 geschlagenen Nocken ermittelt, wieviel % der Nocken eine Aufspleissung des Filaments zeigen. Bei einer derartigen Prüfung zeigen bei einem erfindungsgemäßen Filament unter 1 % der geschlagenen Nocken Spleißerscheinungen. Bei einem herkömmlichen Polyesterfilament gleichen Durchmessers und gleicher Dehnbarkeit beobachtet man 1 bis 10 % gespleißte Nocken.

Die Herstellung der erfindungsgemäßen Filamente erfolgt in an sich bekannter Weise, indem der modifizierte Polyester bei einer Abzugsgeschwindigkeit von 10 bis 3000 m/min schmelzgesponnen wird und die erhaltenen Filamente nach dem Abkühlen verstreckt, gegebenenfalls fixiert und aufgespult werden. Werden erfindungsgemäße Filamente hergestellt mit textilen Einzeltitern von z.B. 1 bis 20dtex, so arbeitet man zweckmäßigerweise im oberen Teil des angegebenen Bereichs der Spinnabzugsgeschwindigkeit, in der Regel bei 200 bis 3000 m/min, vorzugsweise 500 - 3000 m/min. Sollen bevorzugte Monofilamente mit Einzeltitern von über 20 dtex, insbesondere von 100 bis 10000 dtex, hergestellt werden, so arbeitet man zweckmäßigerweise im unteren Teil des Spinnabzugsgeschwindigkeits-Bereiches, und zwar in der Regel bei 10 bis 200 m/min, vorzugsweise bei 10 bis 100 m/min. Bei der Herstellung der erfindungsgemäßen Filamente geht man von einem modifizierten Polyester aus, bestehend aus einer Mischung 80 bis 99 Gew.-%, vorzugsweise 90 bis 98 Gew.-% des oben näher beschriebenen Grundpolyesters mit einer I.V. von >0,75, vorzugsweise >0,85 dl/g und 1 bis 20 Gew.-%, vorzugsweise 2 bis 10 Gew.-% eines hochmolekularen Zusatzmittels der oben angegebenen Art. Grundpolyester und hochmolekulares Zusatzmittel werden zu einer homogenen Schmelze gemischt und diese wird in üblicher Weise versponnen, wobei jedoch darauf geachtet wird, daß zwischen der Herstellung der Schmelze und dem Verspinnen ein möglichst kurzer Zeitraum liegt. Man arbeitet daher so, daß die Gesamtverweilzeit der geschmolzenen Mischung oberhalb der Schmelztemperatur möglichst nicht größer als 15 Minuten ist.

Vorzugsweise setzt man Apparaturen ein, die es gestatten, Verweilzeiten von unter 6 Minuten einzuhalten. So ist es beispielsweise zweckmäßig, den Grundpolyester in einem Extruder aufzuschmelzen und das hochmolekulare Zusatzmittel in die Mischzone des Extruders einzuspeisen, in der es ebenfalls sofort aufgeschmolzen, mit dem Polyethylenterephthalat homogen gemischt und unmittelbar anschließend durch die Spinndüse extrudiert wird.

Die Abzugsgeschwindigkeit der Filamente und ihre anschließende Verstreckung werden so aufeinander abgestimmt, daß Filamente erhalten werden, die die gewünschte Dehnbarkeit aufweisen. Wird eine hohe Abzugsgeschwindigkeit gewählt, so erhält man Filamente mit einer relativ hohen Vororientierung, die zur Einstellung einer bestimmten gewünschten Dehnbarkeit weniger stark verstreckt werden müssen, als Filamente, die bei einer niedrigeren Abzugsgeschwindigkeit ersponnen worden sind. So werden beispielsweise erfindungsgemäß Monofilamente vorzugsweise bei einer Abzugsgeschwindigkeit von 10 bis 100 m/min. ersponnen und im Verhältnis 1:4 bis 1:7 verstreckt. Die Verstreckung der Filamente kann in an sich bekannter Weise ein- oder mehrstufig bei Temperaturen von 80 bis 200° C ausgeführt werden.

Die erfindungsgemäßen Filamente eignen sich für alle technischen Einsätze, bei denen sie hoher Biegebeanspruchung und hohen Druck- und Quetschbelastungen ausgesetzt sind. Insbesondere eignen sie sich für die Herstellung von textilen Materialien, die in der Preßpartie von Papiermaschinen zum Einsatz kommen sollen. Sie vereinen viele Vorteile der bekannten Faserrohstoffe, ohne ihre Nachteile aufzuweisen. Die Feuchtigkeitsaufnahme der erfindungsgemäßen Monofile ist extrem niedrig; die Maßhaltigkeit entsprechend hoch. Sie weisen auch keine Neigung zum Kriechen unter Last auf. Die daraus hergestellten Gewebe lassen sich wie Gewebe aus reinem Polyethylenterephthalat gut fixieren. Dabei werden die Gewebe unter Spannung bei einer Temperatur von 120 - 240° C auf ihr endgültiges Maß gebracht, je nach dem vorgesehenen Einsatzgebiet der Monofile.

Besonders überraschend ist es, daß die erfindungsgemäßen Filamente und Monofile Walkbelastungen deutlich besser überstehen als Filamente und Monofile nach dem Stand der Technik. Dies hat zur Folge, daß z.B. Pressentücher aus erfindungsgemäßen Filamenten eine vielfach längere Laufzeit aufweisen, als solche aus bekannten Polyesterfilamenten. Es ergibt sich somit die überraschende Tatsache, daß bei den erfindungsgemäßen Filamenten die Vorteile des Grundpolyesters, insbesondere des Polyethylenterephthalats, erhalten bleiben, d.h. seine Festigkeit, seine Maßhaltigkeit und seine Fixierbarkeit, trotz des Zusatzes von bis zu 20 % der obengenannten hochmolekularen Zusatzmittel, während andererseits diese Zusätze zu einer hinreichenden Verbeserung der Spleißneigung, der Biegefestigkeit und der Beständigkeit gegen Querbelastungen führen.

Die folgenden Ausführungsbeispiele veranschaulichen die Herstellung erfindungsgemäßer Filamente.

## Beispiel 1

90 kg Polyethylenterephthalat mit einer I.V. von 0,95 und 10 kg eines Copolyesters aus 90 Mol.-% Terephthalsäure, 10 Mol.-% Isophthalsäure und 100 Mol.-% Ethylenglykol mit einer I.V. von 0,9 dl/g werden in einer trockenen Inertgasatmosphäre getrennt aufgeschmolzen und dosiert der Mischstrekke eines Doppelschneckenextruders im zeitlichen Gewichtsverhältnis von 9:1 zugeführt. Unmittelbar nach der Mischung wird die Gemischschmelze durch eine Spinndüse mit 10 Löchern von 1,5 mm Durchmesser ausgepreßt.

Die Gesamtverweildauer des Polyestergemisches bei einer über dem Schmelzpunkt liegenden Temperatur betrug hierbei ca. 4 Minuten.

Die aus der Spinndüse austretenden Filamente wurden mit einer Geschwindigkeit von 25 m/min abgezogen und nach dem Abkühlen in an sich bekannter Weise bei erhöhter Temperatur im Verhältnis 1:6 verstreckt. Anschließend wurde das Material thermofixiert und aufgespult.

Die erhaltenen verstreckten Filamente hatten bei einem Durchmesser von 0,5 mm eine Biegefestigkeit von 15 000 Touren und nur 0,3 % der auf doppelte Breite geschlagenen Nocken zeigten Spleißerscheinungen.

Das Filamentmaterial kann einwandfrei weiterverarbeitet und fixiert werden.

## Beispiel 2

Ein Filament wird hergestellt wie in Beispiel 1 beschrieben, mit dem Unterschied, daß anstelle des dort eingesetzten Terep

hthalsäure/Isophthalsäure-Copolyesters die gleiche Menge Polybutylenterephthalat mit einer I.V. von 1,2 dl/g eingesetzt und die Extrusiongeschwindigkeit so eingestellt wurde, daß nach dem Verstrekken Filamente mit 0,4 mm Durchmesser erhalten wurden.

Die erhaltenen Filamente hatten eine Biegefestigkeit von 52 000 Touren und nur 0,1 % der auf doppelte Breite geschlagenen Nocken zeigten Spleißerscheinungen. Das Filamentmaterial kann einwandfrei weiterverarbeitet und fixiert werden.

## Ansprüche

1. Biege- und spleißfeste Filamente aus einem modifizierten, hochmolekularen Polyester, dadurch gekennzeichnet, daß der modifizierte Polyester eine homogene Mischung aus 80 bis 99 Gew.-% eines spinnbaren Grundpolyesters mit einer I.V. von >0,75 dl/g,
1 bis 20 Gew.-% eines hochmolekularen Zusatzmittels aus der Gruppe der Polyester und Copolyester mit gewinkelten und/oder flexiblen Kettengliedern, aus der Gruppe der zumindest teilweise aliphatischen Polyamide und/oder aus der Gruppe der Polycarbonate und gegebenenfalls Reaktionsprodukten des Grundpolyesters mit den hochmolekularen Zusatzmitteln in einer Menge, die bis zu 30 Mol.-% der eingesetzten Zusatzmittel beträgt, ist.

2. Biege- und spleißfeste Filamente gemäß Anspruch 1, dadurch gekennzeichnet, daß der Grundpolyester neben Terephthalsäureresten und Ethylenglykolresten maximal je 2,5 Mol-% anderer Dicarbonsäure- und/oder Diolreste enthält.

3. Biege- und spleißfeste Filamente gemäß mindestens einem der Ansprüche 1 und 2, dadurch gekennzeichnet, daß ein als hochmolekulares Zusatzmittel eingesetzter Copolyester überwiegend aus Terephthalsäure und Ethylenglykolresten aufgebaut ist.

4. Biege- und spleißfeste Filamente gemäß mindestens einem der Ansprüche 1 bis 3, dadurch gekennzeichnet, daß ein als hochmolekulares Zusatzmittel eingesetzter Polyester oder Copolyester 5 bis 25 Mol.-% gewinkelte und/oder flexible Kettenglieder enthält und als gewinkelte Kettenglieder Isophthalsäurereste und als flexible Kettenglieder Reste aliphatischer oder hydroaromatischer Dicarbonsäuren mit insgesamt 4 bis 12 C-Atomen und/oder Reste von Diolen mit 3 bis 10 C-Atomen und/oder Reste einer 3- oder 4-($\omega$-Hydroxyalkyl)-benzoesäure mit 3 bis 8 C-Atomen in der Alkylkette vorliegen.

5. Biege- und spleißfeste Filamente gemäß mindestens einem der Ansprüche 1 und 2, dadurch gekennzeichnet, daß sie als hochmolekulares Zusatzmittel ein Polyamid, das in der Polymerkette mindestens 50 % aliphatische Bausteine aufweist, enthalten.

6. Biege- und spleißfeste Filamente gemäß mindestens einem der Ansprüche 1 und 2, dadurch gekennzeichnet, daß sie als hochmolekulare Zusatzmittel bekannte Polycarbonate auf der Basis Bisphenol-A oder dessen Substitutionsprodukten enthalten.

7. Biege- und spleißfeste Filamente nach mindestens einem der Ansprüche 1 bis 6, dadurch gekennzeichnet, daß sie eine Biegefestigkeit B entsprechend dem Ausdruck
$$B \geq B_\sigma \bullet d^{-3,5}$$
worin B die Biegefestigkeit in Touren, d der Filamentdurchmesser in mm und $B_\sigma$ eine Konstante mit dem Wert 740 ist, aufweisen.

8. Biege- und spleißfeste Filamente nach mindestens einem der Ansprüche 1 bis 7, dadurch gekennzeichnet, daß sie Titer von 100 bis 10 000 dtex haben.

9. Verfahren zur Herstellung von biege- und spleißfesten Filamenten aus modifiziertem hochmolekularem Polyester durch Schmelzspinnen bei einer Spinnabzugsgeschwindigkeit von 10 bis 3000 m/min., Verstrecken, Thermofixieren und Aufspulen dererhaltenen Filamente, dadurch gekennzeichnet, daß man als modifizierten Polyester eine Mischung aus 80 bis 99 Gew.-% eines Grundpolyesters mit einer I.V. von $\geq$ 0,75 dl/g und 1 bis 20 Gew.-% eines hochmolekularen Zusatzmittels aus der Gruppe der Polyester und Copolyester mit gewinkelten und/oder flexiblen Kettengliedern, der zumindest teilweise aliphatischen Polyamide und der Polycarbonate, einsetzt, daß die Gesamtverweilzeit der genannten erschmolzenen Polyestermischung oberhalb der Schmelztemperatur nicht mehr als etwa 15 Minuten beträgt und daß ein Verstreckverhältnis von 1:3 bis 1:8 eingehalten wird.

10. Verfahren nach Anspruch 9, dadurch gekennzeichnet, daß die Gesamtverweilzeit der erschmolzenen Polyestermischung oberhalb der Schmelztemperatur nicht mehr als etwa 6 Minuten beträgt.

11. Verfahren nach mindestens einem der Ansprüche 9 und 10, dadurch gekennzeichnet, daß man Monofilamente bei einer Spinnabzugsgeschwindigkeit von 10-200 m/min erzeugt.

12. Verwendung der biege- und spleißfesten Filamente des Anspruch 1 zur Herstellung technischer Textilmaterialien für Einsatzgebiete in denen sie hohen dynamischen Belastungen ausgesetzt sind.

13. Verwendung der biege- und spleißfesten Filamente des Anspruch 1 gemäß Anspruch 12, dadurch gekennzeichnet, daß die hergestellten technischen Textilmaterialien in der Preßpartie von Papiermaschinen eingesetzt werden.

FLEXING REVOLUTIONS B

x = KNOWN FILAMENTS

(X) FILAMENTS ACCORDING TO THE INVENTION

FILAMENT DIAMETER d [mm]

THE FUNCTION $B = B_0 \cdot d^{-3,5}$

EP 0 342 563 A2